# EUROPEAN PATENT APPLICATION

(11) **EP 3 618 432 A1**
(43) Date of publication of application: **04.03.2020**
(21) Application number: 18789780.6
(22) Date of filing: 24.04.2018
(51) Int. Cl.: H04N 17/00, G03B 43/00

(54) **TEST DATA PROCESSING DEVICE, TEST DATA PROCESSING METHOD AND TEST APPARATUS**

(30) Priority: 26.04.2017 CN 201710282917
(71) Applicant: Ningbo Sunny Opotech Co., Ltd., Ningbo, Zhejiang 315400 (CN)
(72) Inventor: WANG, Mingzhu, Ningbo Zhejiang 315400 (CN); WANG, Bin, Ningbo Zhejiang 315400 (CN); GAO, Quan, Ningbo Zhejiang 315400 (CN); LU, Yande, Ningbo Zhejiang 315400 (CN); YAO, Lifeng, Ningbo Zhejiang 315400 (CN)
(74) Representative: Gong, Jinping
(86) International application number: PCT/CN2018/084212
(87) International publication number: WO 2018/196734

(57) **Abstract**

The present invention provides a test data processing apparatus, a test data processing method and a test device. The test data processing apparatus is used for processing test image data of a plurality of camera modules arranged in a matrix form included in a spliced test board obtained by testing the plurality of camera modules. The test data processing apparatus comprises: an image acquisition unit for acquiring test image data of each camera module, and comprising a plurality of image acquisition subunits arranged in a matrix form; an image conversion unit for receiving the test image data by multi-channel video streaming and converting it into display data suitable for display; and an image display unit for displaying an image based on the display data on a display interface, which displays a plurality of display sub-interfaces arranged in a matrix form on the display interface. With the test data processing apparatus, the test data processing method and the test device according to the present invention, the acquisition and display of image data of a batch test of camera modules can be realized.

## Description

### Technical field

The present invention relates to the field of data processing, and in particular to a test data processing apparatus, a test data processing method and a test device for acquiring and displaying image data of a batch test of camera modules.

### Technical background

With the development of smart devices, more and more smart devices are inseparable from an image acquisition function. Moreover, high-performance video camera and static camera functions are pursued by the market. For example, smartphones, laptops, smart wearable devices and the like are all developing toward higher-performance camera functions. Performance indicators are also constantly updated as the market changes. These miniature camera applications are inseparable from the use of camera modules.

At present, there are still many unstable factors in the production of the camera modules, and the manufactured camera modules cannot be directly installed in the devices to be used. Then, each camera module needs to be tested with different performance indicators, and for the camera modules that do not meet the requirements, they can not be used. For manufacturers, the yield of the products is very important, and the yield of the shipped products is even more critical. Therefore, in the production of camera modules, all the products are substantially taken for all the tests. This undoubtedly increases the production costs and reduces the production efficiency.

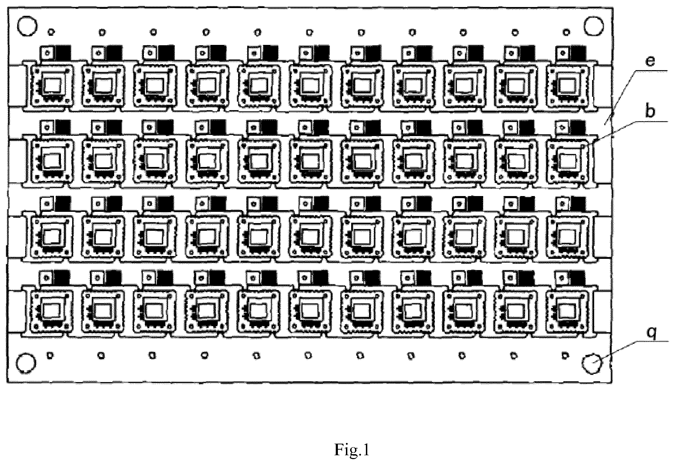

In the production process of the conventional camera modules, each camera module is sequentially taken for various tests. That is to say, for a large amount of products, the tests are carried out separately. However, at present, it also tends to mass production in manufacturing, and the conventional camera module test cannot meet the requirements of mass production. For example, Fig. 1 shows an outline view of a conventional spliced board for assembling camera modules. As shown in Fig. 1, a plurality of identical single printed circuit boards b are spliced on the spliced board e, and one lens is mounted on each of the printed circuit boards b, so that batch assembly of the camera modules can be realized.

However, how to test various kinds of performance of the camera modules in batches during the test is a problem that one is currently facing. Moreover, how to perform acquisition and subsequent processing such as display of batch test data of the camera modules related to the batch test of the camera modules is also a problem that needs to be solved.

### Summary of the invention

An object of the present invention is to provide a test data processing apparatus, a test data processing method and a test device, which can realize the acquisition and display of image data of a batch test of camera modules.

An object of the present invention is to provide a test data processing apparatus, a test data processing method and a test device, which can realize the acquisition and processing of image data generated by a batch test of a plurality of camera modules in a spliced test board by acquiring test image data of the plurality of camera modules with image acquisition subunits arranged in a matrix form.

An object of the present invention is to provide a test data processing apparatus, a test data processing method and a test device, which can display test image data of a plurality of camera modules in a split screen manner on the same display interface by transmitting the acquired test image data of the plurality of camera modules in multi-channel video streams.

An object of the present invention is to provide a test data processing apparatus, a test data processing method and a test device, which can bind an image acquisition subunit by generating a 64-bit ID key of the image acquisition subunit with an FPGA initialization sequence number and a chip serial number of a camera module, thereby realizing uniqueness of corresponding position indices of a plurality of image acquisition subunits on the same display interface, and ensuring uniqueness of a position of each video stream channel.

An object of the present invention is to provide a test data processing apparatus, a test data processing method and a test device, which switches an operation mode by a mode switching unit so that a multi-mode client design can be realized, improving the production efficiency and reducing the CPU usage.

An object of the present invention is to provide a test data processing apparatus, a test data processing method and a test device, which switches an operation mode by a mode switching unit to display different contents on a display interface so that a dual mode of production line production and engineer debugging can be adapted, wherein the production line production mode only provides an acquisition module, cancels a display thread and a processing thread, reduces the CPU load, and the engineer mode turns on the acquisition, processing, display threads for alignment marking and problem analysis.

An object of the present invention is to provide a test data processing apparatus, a test data processing method and a test device, which can ensure stable running of a test process with a daemon process and a servo technology by an error detection unit detecting operation conditions of a client.

According to an aspect of the present invention, there is provided a test data processing apparatus for processing test image data of a plurality of camera modules arranged in a matrix form included in a spliced test board obtained by testing the plurality of camera modules, the test data processing apparatus comprising: an image acquisition unit for acquiring test image data of each camera module, wherein the image acquisition unit comprises a plurality of image acquisition subunits arranged in a matrix form; an image conversion unit for receiving the test image data from the plurality of image acquisition subunits by multi-channel video streaming and converting it into display data suitable for display, wherein each video stream channel is used to transmit the test image data acquired by one image acquisition subunit; and an image display unit for displaying an image based on the display data on a display interface, wherein the image display unit displays a plurality of display sub-interfaces arranged in a matrix form on the display interface.

In the test data processing apparatus described above, each of the plurality of image acquisition subunits has a second identification information generated based on a first identification information of the camera module, so that the plurality of image acquisition subunits at least partially correspond to the plurality of camera modules.

In the test data processing apparatus described above, the first identification information is an FPGA initialization sequence number and a chip serial number of the camera module, and the second identification information is a 64-bit ID key.

The test data processing apparatus described above further comprises: a mode switching unit for selectively turning on or off the image conversion unit and the image display unit based on a predetermined operation mode.

In the test data processing apparatus described above, in a case where the image conversion unit is turned off, the image display unit displays the plurality of display sub-interfaces whose contents are empty.

In the test data processing apparatus described above, in a case where the image conversion unit is turned on, the image display unit displays an image of a test object imaged by a corresponding camera module on the plurality of display sub-interfaces.

The test data processing apparatus described above further comprises: an error detecting unit for sending a detection signal to at least one of the image acquisition unit, the image conversion unit, and the image display unit, and receiving a response signal in response to the detection signal; wherein when the error detecting unit cannot receive a response signal corresponding to a specific image acquisition subunit within a predetermined time, it is determined that the processing of the test image data of the camera module corresponding to the specific image acquisition subunit fails.

According to another aspect of the present invention, there is provided a test data processing method for processing test image data of a plurality of camera modules arranged in a matrix form included in a spliced test board obtained by testing the plurality of camera modules, the test data processing method comprising: acquiring test image data of each of the plurality of camera modules, wherein the test image data is acquired by using a plurality of image acquisition subunits arranged in a matrix form; receiving the test image data from the plurality of image acquisition subunits by multi-channel video streaming and converting it into display data suitable for display, wherein each video stream channel is used to transmit the test image data acquired by one image acquisition subunit; and displaying an image based on the display data on a display interface, wherein a plurality of display sub-interfaces arranged in a matrix form are displayed on the display interface.

In the test data processing method described above, each of the plurality of image acquisition subunits has a second identification information generated based on a first identification information of the camera module, so that the plurality of image acquisition subunits at least partially correspond to the plurality of camera modules.

In the test data processing method described above, the first identification information is an FPGA initialization sequence number and a chip serial number of the camera module, and the second identification information is a 64-bit ID key.

The test data processing method described above further comprises selectively performing the step of receiving and converting the test image data and the step of displaying the image based on the display data, based on a predetermined operation mode.

The test data processing method described above further comprises: in a case where the step of receiving and converting the test image data is not performed, displaying the plurality of display sub-interfaces whose contents are empty.

The test data processing method described above further comprises: in a case where the step of receiving and converting the test image data is performed, displaying an image of a test object imaged by a corresponding camera module on the plurality of display sub-interfaces.

The test data processing method described above further comprises: sending a detection signal to at least one of the image acquisition unit, the image conversion unit, and the image display unit, and receiving a response signal in response to the detection signal; and in a case where a response signal corresponding to a specific image acquisition subunit cannot be received within a predetermined time, determining that the processing of the test image data of the camera module corresponding to the specific image acquisition subunit fails.

According to still another aspect of the present invention, there is provided a test device comprising a test data processing apparatus, the test data processing apparatus for processing test image data of a plurality of camera modules arranged in a matrix form included in a spliced test board obtained by testing the plurality of camera modules, and comprising: an image acquisition unit for acquiring test image data of each camera module, wherein the image acquisition unit comprises a plurality of image acquisition subunits arranged in a matrix form; an image conversion unit for receiving the test image data from the plurality of image acquisition subunits by multi-channel video streaming and converting it into display data suitable for display, wherein each video stream channel is used to transmit the test image data acquired by one image acquisition subunit; and an image display unit for displaying an image based on the display data on a display interface, wherein the image display unit displays a plurality of display sub-interfaces arranged in a matrix form on the display interface.

In the test device described above, each of the plurality of image acquisition subunits has a second identification information generated based on a first identification information of the camera module, so that the plurality of image acquisition subunits at least partially correspond to the plurality of camera modules.

In the test device described above, the first identification information is an FPGA initialization sequence number and a chip serial number of the camera module, and the second identification information is a 64-bit ID key.

In the test device described above, the test data processing apparatus further comprises: a mode switching unit for selectively turning on or off the image conversion unit and the image display unit based on a predetermined operation mode.

In the test device described above, in a case where the image conversion unit is turned off, the image display unit displays the plurality of display sub-interfaces whose contents are empty.

In the test device described above, in a case where the image conversion unit is turned on, the image display unit displays an image of a test object imaged by a corresponding camera module on the plurality of display sub-interfaces.

In the test device described above, the test data processing apparatus further comprises: an error detecting unit for sending a detection signal to at least one of the image acquisition unit, the image conversion unit, and the image display unit, and receiving a response signal in response to the detection signal; wherein when the error detecting unit cannot receive a response signal corresponding to a specific image acquisition subunit within a predetermined time, it is determined that the processing of the test image data of the camera module corresponding to the specific image acquisition subunit fails.

The test data processing apparatus, the test data processing method and the test device according to the present invention can realize the acquisition and display of image data of a batch test of camera modules, thereby reducing the personnel input, reducing the device space, and improving the production efficiency.

### Brief description of the drawings

Fig. 1 shows an outline view of a conventional spliced board for assembling camera modules;
Fig. 2 is an overall schematic view showing a spliced test board according to an embodiment of the present invention;
Fig. 3 is an exploded schematic view showing the spliced test board according to the embodiment of the present invention;
Fig. 4 is a structural schematic view of a support plate of the spliced test board according to the embodiment of the present invention;
Fig. 5 is a top view of a medium module disposed on the support plate according to the embodiment of the present invention;
Fig. 6 is a bottom view of the medium module disposed on the support plate according to the embodiment of the present invention;
Fig. 7 is an overall schematic view of the medium module according to the embodiment of the present invention;
Fig. 8 is an overall schematic view of the medium module connected to a camera module according to the embodiment of the present invention;
Fig. 9 is another overall schematic view of the medium module connected to the camera module according to the embodiment of the present invention;
Fig. 10 is a schematic block diagram of a test data processing apparatus according to the embodiment of the present invention;
Fig. 11 is a schematic view of a display interface of test data according to the embodiment of the present invention;
Fig. 12 is a schematic view of a monitoring process of test data processing according to the embodiment of the present invention;
Fig.13 is a schematic flowchart of a test data processing method according to the embodiment of the present invention;
Fig. 14 is a schematic block diagram of a test device according to the embodiment of the present invention; and
Fig. 15 is a schematic view of testing a camera module disposed on a spliced test board by the test device according to the embodiment of the present invention.

### Detailed description of the embodiments

The following description is presented to disclose the present invention to enable those skilled in the art to practice the present invention. Preferred embodiments in the following description are by way of example only, and other obvious modifications are conceivable to those skilled in the art. The basic principles of the present invention as defined in the following description may be applied to other embodiments, modifications, improvements, equivalents, and other embodiments without departing from the spirit and scope of the present invention.

The terms and phrases used in the following description and claims are not limited to their literal meanings, but are used by the inventors only to enable a clear and consistent understanding of the present invention. Therefore, it is obvious to those skilled in the art that the following description of various embodiments of the present invention is provided only for the purpose of illustration rather than for the purpose of limiting the present invention as defined by the appended claims and their equivalents.

The terms used herein are only for the purpose of describing various embodiments and are not intended to be limiting. As used herein, a singular form is also intended to include a plural form, unless the context clearly indicates the exceptions. In addition, it will be understood that the terms "include" and/or "have", when used in the description, designate the existence of the described features, number, steps, operations, components, elements, or combinations thereof, without excluding the existence or addition of one or more other features, numbers, steps, operations, components, elements, or combinations thereof.

It should be understood by those skilled in the art that in the disclosure of the present invention, the orientation or positional relationship indicated by the terms "longitudinal", "transverse", "upper", "lower", "front", "back", "left", "right", "vertical", "horizontal", "top", "bottom", "inside", "outside", etc. is based on the orientation or positional relationship shown in the figures, which is merely for the convenience of describing the present invention and simplifying the description, and does not indicate or imply that the mentioned apparatus or element must have a particular orientation and be constructed and operated in the particular orientation. Therefore, the above terms cannot be construed as limiting the present invention.

It may be understood that the term "a" should be understood to mean "at least one" or "one or more", that is, in one embodiment, the number of one element may be one, and in other embodiments, the number of the element may be multiple, and the term "a" cannot be construed as limiting the number.

The terms used herein, including technical and scientific terms, have the same meanings as the terms commonly understood by those skilled in the art, as long as the terms are not defined differently. It should be understood that terms defined in a commonly used dictionary have meanings consistent with the meanings of the terms in the prior art.

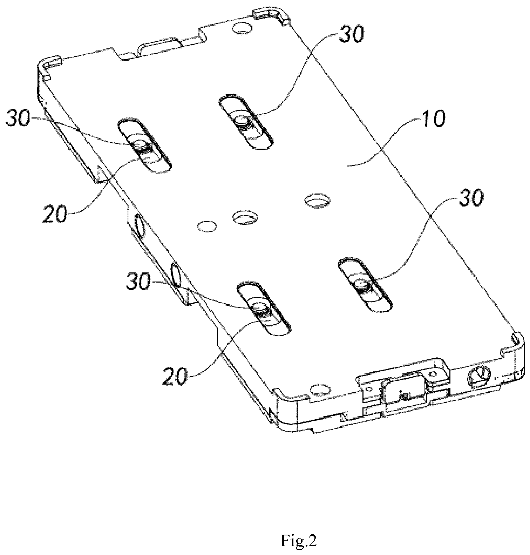

As described above, in order to solve the problem of the batch test of the camera modules, an embodiment of the present invention provides a spliced test board for a camera module to test two or more camera modules. Fig. 2 is an overall schematic view showing a spliced test board according to the embodiment of the present invention. As shown in Fig. 2, the spliced test board includes a board body 10 and a plurality of medium modules 20, wherein the medium module 20 is connected to a camera module 30, and the camera module 30 is a finished product to be tested after the assembly. The camera module 30 is connected to the medium module 20 for performing various performance tests on the camera module 30. The camera module 30 may be connected and detachably fixed to the medium module 20, and the medium module 20 may carry the camera module 30 to perform all test operations. It is worth mentioning that the connection between the medium module 20 and the camera module 30 is one-to-one. That is to say, the camera module 30 may complete all test operations by the medium module 20 without having to repeatedly access and remove with respect to the medium module 20. For example, the camera module 30 to be tested is connected and fixed to the medium module 20 before starting a test operation. The medium module 20 will carry the camera module 30 to perform all the tests. The medium module 20 will always be connected to the camera module 30 regardless of whether the camera module 30 passes the tests or not. That is to say, the medium module 20 may also assist the camera module 30 in performing corresponding operations without passing a test for the camera module 30 that has not passed the test. For the camera module 30 that passes the test, the medium module 20 will also accompany the camera module 30 to complete other tests. By means of the medium module 20, the camera module 30 can avoid repeated access and removal during all of the tests, including a flow transfer process, thereby reducing the adverse impacts of the test on the camera module 30, reducing the time required for each camera module 30 to test and improving the overall efficiency of the test.

In addition, the medium module 20 may simultaneously provide a stable connection of the camera module 30 in terms of the structure and circuit. The medium module 20 provides a circuit expansion of the camera module 30 for testing requirements, and indirectly causes the camera module 30 to perform various performance tests. Moreover, the camera module 30 may be given a certain protection by the medium module 20, so that the camera module 30 can complete all test operations by means of the medium module 20. Of course, the camera module 30 may be detached from the medium module 20 when needed. For example, after a certain test fails or all the tests are completed, the camera module 30 may be detached from the medium module 20 after testing, and then the camera module 30 completes the tests. It should be noted that the medium module 20 may be adapted to different types of camera modules 30. Moreover, the medium module 20 is less expensive and does not require complicated processes. In this way, the medium module 20 may repeatedly accompany the camera module 30 for testing, thereby reducing the testing cost. Moreover, the medium module 20 has a high degree of matching for different test items, and the medium module 20 may participate in different test items. For the same camera module 30 to be tested, it is not necessary to replace the connected medium module 20. That is to say, the medium module 20 may carry different types of camera modules 30 for testing. Therefore, for the test process of the same camera module 30, the camera module 30 and the medium module 20 correspond to each other and need not be replaced. For different types of camera modules 30, the medium module 20 may be adapted, and the medium module 20 may carry different camera modules 30 for testing. For different types of test items, the medium module 20 has extremely high adaptability to a test device, and can ensure that the camera module 30 effectively completes the test operations.

In addition, the board body 10 provided by the embodiment of the present invention is provided with a plurality of medium modules 20 so that a plurality of camera modules 30 may be tested in testing. Preferably, the board body 10 may be placed with m×n medium modules 20 arranged in an array form, where m and n are integers greater than or equal to 2. The board body 10 fixes the medium modules 20 in the array form, and ensures that the environment in which the medium modules 20 are located is consistent in the test process. That is to say, the test conditions of all the medium modules 20 placed on the test board are consistent. In this way, the test environment of the camera module 30 carried by the medium module 20 can be ensured to be stable. For example, as shown in Fig.2, according to the embodiment of the present invention, the test board 10 may be placed with four medium modules 20, each of which is correspondingly connected to a camera module 30.

In the test process, the medium module 20 may be removed from the board body 10 or may be re-placed to the board body 10. That is, the medium module 20 is detachable relative to the board body 10 in the overall test process. The medium module 20 carries the camera module 10 and is removably placed on the board body 10 according to different needs. Then, in the test process, the camera module 30 is not required to be removed, and the camera module 30 is operated by means of the medium module 20 to provide a certain protection for the camera module 30. Moreover, the medium module 20 is preferably fabricated from a hard material, which is suitable for manipulation of the medium module 20 using a mechanical means. For example, after performing a performance test, if a camera module 30 carried by one of four medium modules 20 fails to pass the test, the corresponding medium module 20 is removed, and the failed camera module 30 is removed. Correspondingly, when a camera module 30 that has passed the test needs to be placed on the board body 10, the carried camera module 30 is also placed on the board body 10 by means of placing the medium module 20 on the board body 10. Of course, in addition to the removal and placement of any one of the medium modules 20 of the board body 10, the board body 10 also provides for the identification, positioning and other operations of any one of the medium modules 20. Therefore, the medium modules 20 are consistent with each other in the test environment in which they are located, and any one of the medium modules 20 may be operated separately. With the array arrangement, the medium modules 20 in the board body 10 can be conveniently found and located.

It is worth mentioning that the medium module 20 has a one-to-one correspondence with the camera module 30 in the test process. The positions of the medium modules 20 in the board body 10 are different, and the board body 10 can ensure that each medium module 20 is at the same height or in the same time dimension. That is to say, the camera modules 30 are operated in batches by the medium modules 20 and the board body 10. In particular, for the test operation of the camera modules 30 in a batch, the medium modules 20 and the board body 10 can ensure the consistency and effectiveness of testing for each camera module 30. Moreover, a direct operation of the medium module 20 does not adversely affect the camera module 30. By the indirect operation of the corresponding medium module 20 by the board body 10, the camera module 30 can be tested more effectively. Preferably, for mechanized or automated test lines, both the medium module 20 and the board body 10 can emancipate the productive forces and reduce the production costs.

In particular, there are corresponding positioning structures in the board body 10 of the spliced test board, between the board body 10 and the medium modules 20, and between the medium modules 20 and the camera modules 30 to ensure the finding of the test board body 10, the medium modules 20 and the camera modules 30 in the flow transfer and test process. Preferably, each camera module 30 may be consistent with the medium module 20 in height, and each medium module 20 is consistent with the board body 10 in height, so that each camera module 30 has the consistent height in the test. Preferably, the position of each camera module 30 relative to the medium module 20 is determined, and the position of the medium module 20 relative to the board body 10 is determined, so that the position of the camera module 30 is determined relatively in the test.

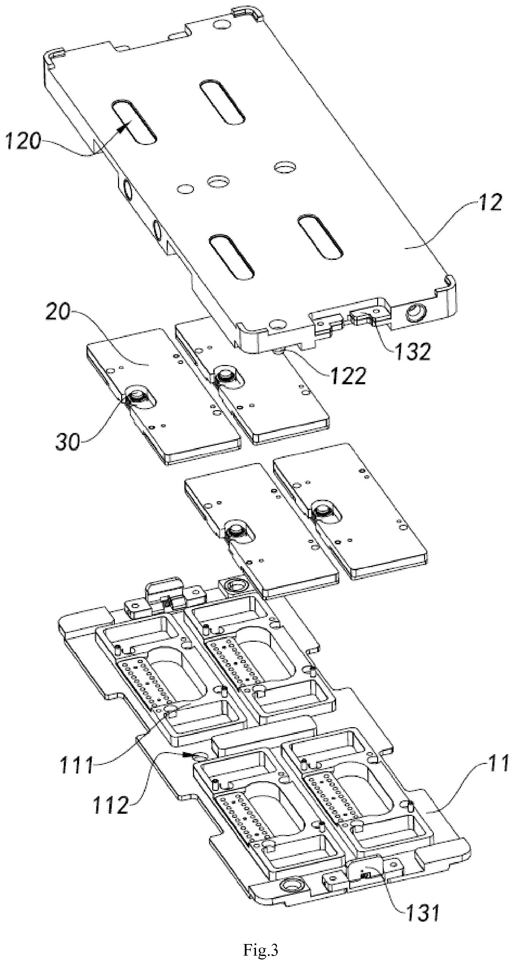

Fig. 3 is an exploded schematic view showing a spliced test board according to the embodiment of the present invention. As shown in Fig. 3, the board body 10 of the spliced test board specifically includes a support plate 11, and the support plate 11 is placed with medium modules 20, so that the medium modules 20 may be fixed in the board body 10 in a certain arrangement and the medium modules 20 are operated by means of the test board 10. The support plate 11 of the board body 10 is detachably connected to the medium modules 20, so that the medium modules 20 placed in the board body 10 can be in a consistent test environment. Preferably, each medium module 20 is detachably connected to the support plate 11, so that the medium module 20 is placed in or removed from the board body 10 as needed. The medium module 20 is preferably snapped and fastened to the support plate 11. The medium module 20 is preferably adapted to be adhered to the support plate 11 by a male-female structure. The medium module 20 is preferably adapted to be magnetically attracted to the support plate 11. The medium module 20 is preferably adapted to be connected to the support plate 11 by a post/hole. The board body 10 further includes a cover plate 12 and a snap-engaging assembly 13, wherein the cover plate 12 is detachably covered on the support plate 11 to protect the medium module 20 placed on the support plate 11, and wherein the snap-engaging assembly 13 is disposed on the support plate 11 and the cover plate 12 to detachably connect the cover plate 12 to the support plate 11. It will be apparent that when the medium module 20 is placed on the support plate 11, the snap-engaging assembly 13 fixes the cover plate 12 to the support plate 11, and then the medium module 20 cannot be removed from the board body 10. Correspondingly, when the medium module 20 needs to be removed from the board body 10, the snap-engaging assembly 13 is opened so that the cover plate 12 can be detached from the support plate 11, and then the medium module 20 can be taken out.

Here, it can be understood by those skilled in the art that the board body 10 according to the embodiment of the present invention may also not include the above-mentioned cover plate 12. For example, in a case where the medium module 20 is directly fixed to the support plate 11, the board body 10 according to the embodiment of the present invention may include only a single support plate 11.

Moreover, although in the embodiment described above, the board body 10 in combination with the medium module 20 of the embodiment of the present invention is used as an embodiment, it can be understood by those skilled in the art that the spliced test board of the embodiment of the present invention where the board body 10 is used in combination with the medium module 20 may also be used separately. For example, the spliced test board may be directly connected to the camera module 30 without the medium module 20. In this way, by connecting a plurality of camera modules 30 on the spliced test board according to the embodiment of the present invention, the test of the optical performance of the camera modules 30 in a batch may also be achieved, thereby achieving an effect of improving the test efficiency. Alternatively, the spliced test board may be integrally molded and fabricated with the medium module 20 and the board body 10. Then, the camera module 30 may also be directly connected to the spliced test board for testing.

For example, in the absence of the medium module 20, all the pins of the camera module are led out, and the camera module is mounted in the board body 10 by using at least two layers of snap-fasteners. Since the contacted pins are concentrated, a flex cable can be used to transfer the circuit of the camera module to access the test device.

That is to say, the spliced test board according to the embodiment of the present invention can accommodate only the assembled camera module, only the medium module connected to the camera module, or both the camera module and the medium module. By means of the spliced test board, the camera module 30 can implement batch processing in all the tests, including the flow transfer process, reducing the time required for each camera module 30 to test, and improving the overall efficiency of the test.

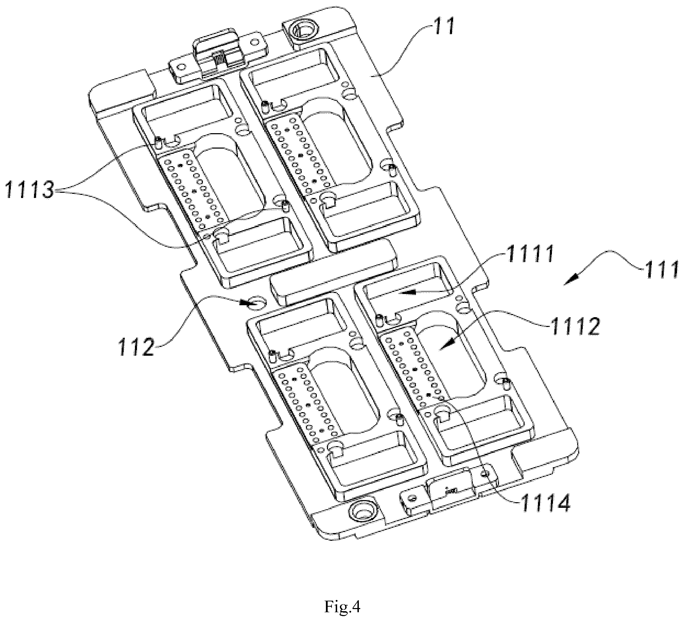

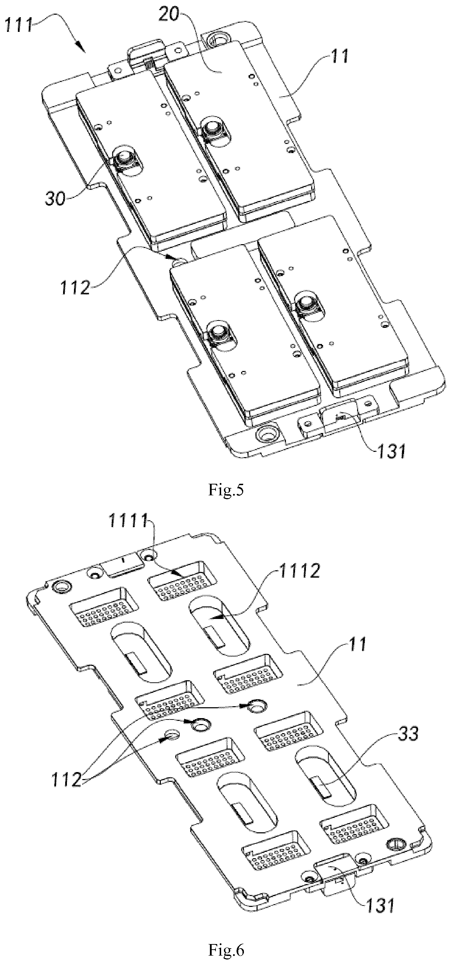

Hereinafter, the structure of the spliced test board according to the embodiment of the present invention will be further described in detail. Fig. 4 is a structural schematic view of a support plate of the spliced test board described above according to the embodiment of the present invention. Fig. 5 is a top view of the medium module disposed on the support plate according to the embodiment of the present invention. Fig. 6 is a bottom view of the medium module disposed on the support plate according to the embodiment of the present invention. As shown in Figs. 4 to 6, according to the embodiment of the present invention, the medium module 20 is placed in a 2x2 array form on the support plate 11 of the board body 10 of the spliced test board. Each medium module 20 is placed in a certain determined position. The support plate 11 provides at least one test position 111 where a medium module 20 is placed correspondingly, and then the camera module 30 carried by the medium module 20 is placed at a determined position. The support plate 11 of the spliced test board has four test positions 111 where four medium modules 20 may be placed correspondingly. The test position 111 further includes a test interface portion 1111, a recognition portion 1112, a positioning portion 1113, and a placement portion 1114. It is worth mentioning that the structure of the test position 111 corresponds to the structure of the medium module 20. That is, in the present preferred embodiment, the interface 1111 is an interface through hole provided for the medium module 20, and the recognition portion 1112 is a through hole for recognizing the identity of the camera module 30 carried by the medium module 20, and the positioning portion 1113 is a positioning structure relative to the medium module 20, and the placement portion 1114 is a placement position of the camera module 30 of the corresponding medium module 20. It is worth mentioning that the structure of each test position 111 is consistent, which is convenient for the adaptive placement of the medium module 20. More specifically, the test interface portion 1111 is two symmetric through holes in the embodiment of the present invention, and the test interface portion 1111 allows the interface of the test device to be connected to the medium module 20. Of course, depending on the design of the medium module 20, the position and shape of the test interface portion 1111 need to be adjusted correspondingly. The recognition portion 1112 is a position corresponding to the identifier of the carried camera module 30. In the embodiment of the present invention, the recognition portion 1112 is a through hole that can recognize the identity of the camera module 30. The identity of the camera module 30 may be recognized by the recognition portion 1112. Of course, the shape and form of the recognition portion 1112 may be correspondingly adjusted according to the identification mode of the camera module 30. For example, when the identification code is required to be identified by scanning, the recognition portion 1112 is a light-passing through hole, and when the RFID information is required to be identified, the recognition portion 1112 may be a recognized corresponding position. The positioning portion 1113 is a structure whose position relative to the medium module 20 is determined, so that the positions of the test interface portion 1111 and the recognition portion 1112 relative to the support plate 11 are determined. The positions of each positioning portion 1113 and the medium module 20 are mutually determined, that is, it can be ensured that the positions of all the medium modules 20 relative to the support plate 11 are determined. This is advantageous for an increase in the efficiency of the test operation of the medium module 20. In the embodiment of the present invention, the medium module 20 is square, and the positioning portion 1113 is a positioning post in a diagonal direction with respect to the medium module 20. In other feasible embodiments, the positioning portion 1113 may specifically be a magnetic sheet, a snap-fastener pile or the like. The placement portion 1114 is a flexible sheet that is fixed to the test position 111 and provides a high degree of complement and buffer for the camera module 30 of the medium module 20. Of course, the design of the placement portion 1114 may also be adjusted according to the design of the medium module 20. Specifically, as shown in Figs. 5 and 6, the design of the test portion 111 corresponds to the design of the medium module 20, and the specific structure of each test portion 111 is mainly for satisfying the stability and energization conditions of the medium module 20.

It should be noted that, in the embodiment of the present invention, the support plate 11 of the spliced test board has at least one calibration position 112, and the calibration position 112 is located at a central axis of the support plate 11. The calibration position 112 provides a calibration of the position of the support plate 11, that is, a specific position of the support plate 11 can be determined based on the calibration position 112. In addition, the cover plate 12 also has a calibration position 122 corresponding to the support plate 11, that is, the overall position of the board body 10 can be determined by means of mutual calibration of the calibration position 122 of the support plate 11 and the calibration position 122 of the cover plate 12. In addition, the cover plate 12 further provides at least one light-passing opening 120 to provide a light-passing condition for the test of the camera module 30. It can be understood by those skilled in the art that the light-passing opening 120 may be in one-to-one correspondence with the camera module 30, or may be provided as an opening in a one-to-many correspondence with the camera modules 30, and does not affect the technical features of the present invention.

When the medium module 20 is placed on the support plate 11 of the board body 10, the cover plate 12 covers and fixes the medium module 20 to the support plate 11. At this time, a snap-engaging assembly (not shown) snaps, engages and fixes the cover plate 12 and the support plate 11 together, thereby fixing the position of each medium module 20. In the test process and the flow transfer, the board body 10 can stably fix each medium module 20, and the camera module 30 carried by each medium module 20 is in the same test environment. It is worth mentioning that the positions of each board body 10 and the medium module 20 between the board bodies 10 used in the test are relatively determined. The camera module 30 of the medium module 20 can find the medium module 20 of the board body 10 by looking for the board body 10.

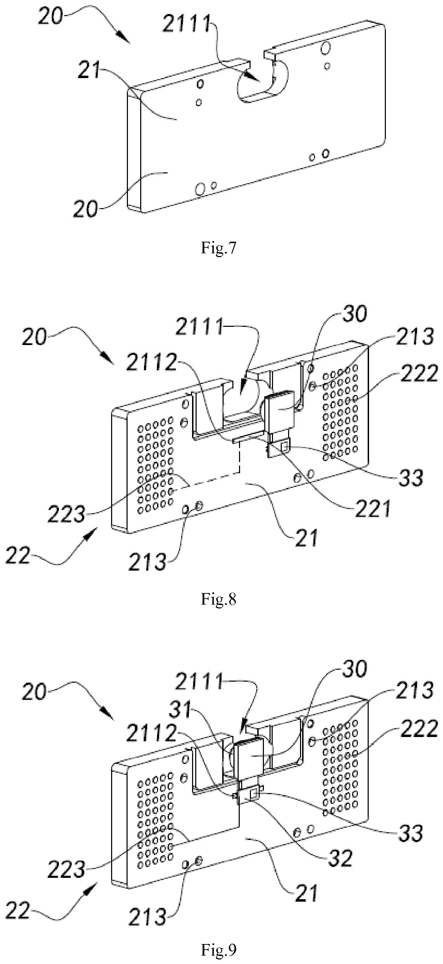

Hereinafter, the medium module in the embodiment of the present invention will be further described in detail. Fig. 7 is an overall schematic view of the medium module described above according to the embodiment of the present invention. Fig. 8 is an overall schematic view of a medium module connected to the camera module according to the embodiment of the present invention. Fig. 9 is another overall schematic view of the medium module connected to the camera module according to the embodiment of the present invention. As shown in Figs. 7 to 9, the medium module 20 specifically includes a substrate 21 and an expansion circuit 22, the expansion circuit 22 is pre-embedded in the substrate 21, and the substrate 21 is preferably integrally molded. The medium module 20 is adapted to be connected to the camera module 30. The camera module 30 is connected to the test device via the medium module 20 and is protected by the medium module 20. In the test process and the flow transfer, the operation of the camera module 30 is accomplished by the medium module 20. For convenience of explanation, a specific structure of the camera module 30 is shown here, mainly including a lens 31, a plug 32 and an identifier 33, wherein the identifier 33 is used for identifying the identity of the camera module 30. As shown in Fig. 8, the substrate 21 further includes a fixing position 211 adapted to connect and fix the camera module 30. More specifically, the fixing position 211 provides a lens slot 2111 for placing the lens 31 of the camera module 30. The fixing position 211 of the substrate 21 further includes a socket 2112 that can be closely connected to the plug 32 of the camera module 30. The camera module 30 can be stably fixed to the substrate 21 through the connection of the lens slot 2111 and the socket 2112. Moreover, the fixing position 211 has adaptability, in which different types of camera modules 30 can be placed and connected. In the embodiment of the present invention, the camera module 30 is a single-lens camera module, and the lens slot 2111 allows the lens 31 of the camera module 30 to be completely placed. The socket 2112 is also adapted to the plug 32 of the camera module 30. That is, in order to adapt to the camera module 30, the structure of the fixing position 211 is set accordingly. However, the fixing position 211 not only connects the camera module 30 to the substrate 21 but also simultaneously ensures that the camera module 30 is always operated by means of the medium module 20 in the test process and in the flow transfer. More specifically, each medium module 20 will correspond to the camera module 30 in the test process and in the flow transfer, and then the fixing position 211 can provide stability of the camera module 30 in terms of the structure and circuit connection. It is worth mentioning that in the embodiment of the present invention, the socket 2112 of the fixing position 211 takes the form of a connector, so that the camera module 30 is not easily dropped in operation. That is to say, by the fixing of the fixing position 211, the camera module 30 will maintain a stable connection relationship with respect to the medium module 20.

More specifically, the expansion circuit 22 of the medium module 20 further includes a module interface 221, a test interface 222, and a trace 223 connected to the module interface 221 and the test interface 222. The module interface 221 and the test interface 222 are correspondingly connected by the trace 223. Preferably, the module interface 221 and the test interface 222 are connected to each other in a certain manner and a certain correspondence. The module interface 221 is built in the socket 2112 of the fixing position 211, so that when the plug 32 of the camera module 30 is connected to the socket 2112, the circuit of the camera module 30 is mutually connected with the expansion circuit 22. Further, the circuit of camera module 30 is connected to the expansion circuit 22 so that camera module 30 can be tested by means of the test interface 222 of the expansion circuit 22. That is to say, after the camera module 30 is connected to the expansion circuit 22, the test of the camera module 30 can be performed by means of the test interface 222 of the expansion circuit 22. Moreover, the test interface 222 provides a corresponding access port for the test device to test the camera module 30 carried by the medium module 20. In an embodiment of the invention, the test interface 222 is preferably disposed in a form of electrical contacts on the surface of the substrate 21 for electrically connecting a probe of the test device by means of contact. More preferably, the test interface 222 in the embodiment of the present invention takes a distributed arrangement manner, so that the test interface 222 can be contacted more stably and accurately. In the embodiment of the present invention, the test interface 222 is preferably symmetrically arranged on a surface of the substrate 21 in two parts. In other feasible modes, the test interface 222 may be a one-piece layout. Here, the layout manner of the test interface 222 is not limited in the embodiment of the present invention.

Further, the substrate 21 of the medium module 20 further includes at least one positioning member 213 which is disposed correspondingly to the positioning portion 1113 of the test position 111 of the support plate 11 of the board body 10. That is to say, the positioning member 213 of the medium module 20 and the positioning portion 1113 of the board body 10 are disposed correspondingly to each other so that the position of the medium module 20 relative to the board body 10 is determined. In the embodiment of the present invention, the medium module 20 is square, and the positioning member 213 is a positioning hole in a diagonal direction with respect to the medium module 20. In other feasible preferred embodiments, the positioning member 213 may specifically be a magnetic sheet, a snap-fastener pile or the like. It should be noted that the positioning member 213 and the positioning portion 1113 are disposed correspondingly to each other, that is, the positioning member 213 and the positioning portion 1113 are in pairs. When the positioning member 213 and the positioning portion 1113 are matched correspondingly to each other, the medium module 20 and the test position 111 of the board body 10 are mutually positioned. After each medium module 20 in the board body 10 are mutually positioned by the positioning member 213 and the positioning portion 1113, the medium module 20 is positioned with the board body 10. Then, it can be understood that when the camera module 30 and the medium module 20 are fixed to each other, and the medium module 20 and the board body 10 are mutually positioned, the position of each camera module 30 in the board body 10 can also be determined. Further, because the board body 10 can be positioned by a marking position 112, the relative position of the camera module 30 in the testing process can be determined. It can be understood that the positioning information of the camera module 30 at the respective position of the media module 20 on the board body 10 is very important for the entire batch test.

With the spliced test board described above, and preferably, the medium module of the embodiment of the present invention, a plurality of camera modules can be tested simultaneously. In the test process, the camera module obtains test data by imaging a test object, such as a mark. It can be known from the processing of the test data whether the camera module has passed a specific test. The above-described spliced test board including the plurality of camera modules can perform a batch test on the camera modules, and each camera module generates image data for testing. Therefore, how to process such as acquire and display, the image data becomes a problem that needs to be solved.

Therefore, according to another embodiment of the present invention, there is provided a test data processing apparatus for processing test image data of a plurality of camera modules arranged in a matrix form included in a spliced test board obtained by testing the plurality of camera modules, the test data processing apparatus comprising: an image acquisition unit for acquiring test image data of each camera module, wherein the image acquisition unit comprises a plurality of image acquisition subunits arranged in a matrix form; an image conversion unit for receiving the test image data from the plurality of image acquisition subunits by multi-channel video streaming and converting it into display data suitable for display, wherein each video stream channel is used to transmit the test image data acquired by one image acquisition subunit; and an image display unit for displaying an image based on the display data on a display interface, wherein the image display unit displays a plurality of display sub-interfaces arranged in a matrix form on the display interface.

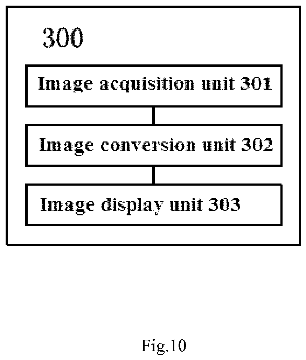

Fig. 10 is a schematic block diagram of a test data processing apparatus according to the embodiment of the present invention. As shown in Fig. 10, the test data processing apparatus 300 according to the embodiment of the present invention is used for processing test image data of a plurality of camera modules arranged in a matrix form included in a spliced test board obtained by testing the plurality of camera modules. More specifically, the test data processing apparatus 300 includes: an image acquisition unit 301 for acquiring test image data of each camera module, wherein the image acquisition unit 301 comprises a plurality of image acquisition subunits arranged in a matrix form; an image conversion unit 302 for receiving the test image data from the plurality of image acquisition subunits of the image acquisition unit 301 by multi-channel video streaming and converting it into display data suitable for display, wherein each video stream channel is used to transmit the test image data acquired by one image acquisition subunit; and an image display unit 303 for displaying an image based on the display data converted by the image conversion unit 302 on a display interface, wherein the image display unit 303 displays a plurality of display sub-interfaces arranged in a matrix form on the display interface.

That is, in the test data processing apparatus according to the embodiment of the present invention, corresponding to a spliced test board including a plurality of camera modules in a matrix form, the test data processing apparatus also includes a plurality of image acquisition subunit arranged in a matrix form, wherein each image acquisition subunit corresponds to one camera module, and images are acquired from corresponding camera modules in the test process.

Here, it can be understood by those skilled in the art that the number of image acquisition subunits in the test data processing apparatus according to the embodiment of the present invention may be the same as the number of camera modules included in the spliced test board, or may be smaller than the number of camera modules included in the spliced test board, and may be, for example, a half the number of camera modules included in the spliced test board. In this way, when the number of camera modules included in the spliced test board is large, an excessive number of image acquisition subunits are not required to be correspondingly matched, thereby reducing the complexity of the entire test system and also facilitating optimization of the cost.

Therefore, in the test data processing apparatus according to the embodiment of the present invention, the acquisition and processing of image data generated by a batch test of the plurality of camera modules can be realized by acquiring test image data of the plurality of camera modules in the spliced test board with the image acquisition subunits arranged in the matrix form.

In addition, in the test data processing apparatus according to the embodiment of the present invention, the test image data of the plurality of camera modules acquired by the image acquisition subunits are transmitted to the image conversion unit by means of multi-channel video streaming, and the test image data of each channel is converted by the image conversion unit into display data suitable for display. In this way, when the image display unit displays an image based on the display data on the display interface, the test image data of the plurality of camera modules can be displayed on the same display interface by means of a plurality of display sub-interfaces according to the multi-channel display data. Moreover, the image displayed on each display sub-interface may correspond to the test image data acquired by one image acquisition subunit, and further corresponds to one camera module on the spliced test board. Therefore, the test data processing apparatus according to the embodiment of the present invention can realize display of image test data that intuitively corresponds to the plurality of camera modules on the spliced test board.

Since the mainstream video image transmission in the current module industry only supports single-channel video streaming of up to 8 million pixels, if the test image data obtained by testing the plurality of camera modules included in the spliced test board is acquired and displayed in a conventional manner, it will inevitably lead to inefficiency. For example, when viewing the test data of the camera modules from a computer, since only one computer can view the test image of one camera module at the same time, in order to improve the test efficiency, the number of computers needs to be increased to simultaneously view the rest image of the plurality of camera modules. However, on the one hand, this increases the cost due to the increase of the number of computers. On the other hand, each computer needs to register or log in to view the test image data of the camera modules, and the manpower input of the production line is also required to be increased.

Therefore, the embodiment of the present invention actually provides a design scheme for a single computer to drag a plurality of image acquisition apparatuses. For example, it can support one computer to drag eight image acquisition apparatuses by means of interlaced scanning, for example, and video image acquisition and display can be performed simultaneously for 16 camera modules. In this way, it is possible to overcome the problem that one computer only corresponded to one image acquisition apparatus in the past, reduce the number of computers, reduce the manpower input of the production line, reduce the space of the whole device, and increase the output of the single device.

In the implementation of the test data processing apparatus according to the embodiment of the present invention, it may be performed by modifying an existing test device. Specifically, an underlying image acquisition tooling module of the existing test device may be packaged by using an assembly technology, and the uniqueness of the FPGA and chip factory code setting of the tested camera module is used to generate a 64-bit tooling ID key to register and bind the tooling. In this way, the uniqueness of the position index of one computer corresponding to multiple toolings is realized, and the uniqueness of the position of each video stream channel is ensured.

However, it can be understood by those skilled in the art that the embodiment of the present invention is not limited to the use of the FPGA initialization serial number and the chip serial number of the camera module, nor is it limited to generating the 64-bit tooling ID key, as long as the identification information of each image acquisition subunit is in one-to-one correspondence with the identification information of each camera module.

Therefore, in the test data processing apparatus described above, each of the plurality of image acquisition subunits has a second identification information generated based on a first identification information of the camera module, so that the plurality of image acquisition subunits at least partially correspond to the plurality of camera modules.

Moreover, in the test data processing apparatus described above, the first identification information is an FPGA initialization sequence number and a chip serial number of the camera module, and the second identification information is a 64-bit ID key.

Therefore, the test data processing apparatus according to the embodiment of the present invention can bind an image acquisition subunit by generating a 64-bit ID key of the image acquisition subunit with an FPGA initialization sequence number and a chip serial number of a camera module, thereby realizing the uniqueness of corresponding position indices of a plurality of image acquisition subunits on the same display interface, and ensuring the uniqueness of a position of each video stream channel.

In the test data processing apparatus according to the embodiment of the present invention, since the test image data obtained by testing the plurality of camera modules included in the spliced test board is acquired and processed, and as described above, the resolution of each test image data is not lowered, and thus higher requirements are placed on the performance of the test data processing apparatus. For example, in the case where the test data processing apparatus according to the embodiment of the present invention is implemented as the server-client architecture, there are high requirements on the CPU performance of both the server and the client.

Therefore, in the test data processing apparatus according to the embodiment of the present invention, a multi-mode mode is preferably adopted. In the production line mode, only video acquisition is supported, and processing and display are not performed. Only when an algorithm operation is required to be performed, image processing conversion and display are performed to reduce the load of CPU. In this way, the efficiency of the multi-channel video stream algorithm operation can also be improved. In addition, in the engineer mode, the real-time processing thread and display thread module of the image can be turned on, so that the engineer can check the test image data, thereby troubleshooting and analyzing the positioning, alignment and module imaging of production line alignment marks, and device anomalies of the test device.

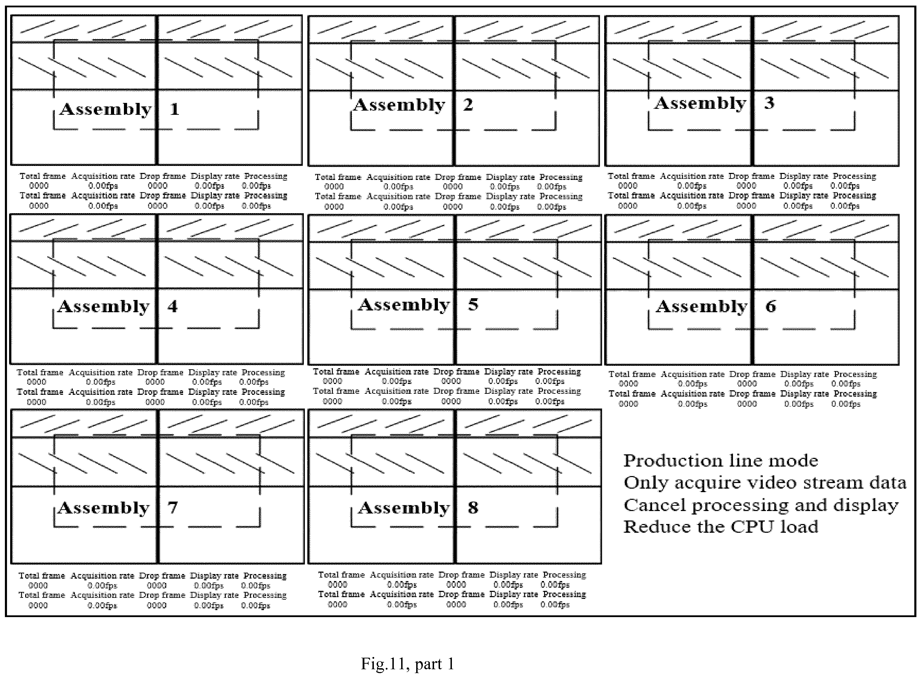

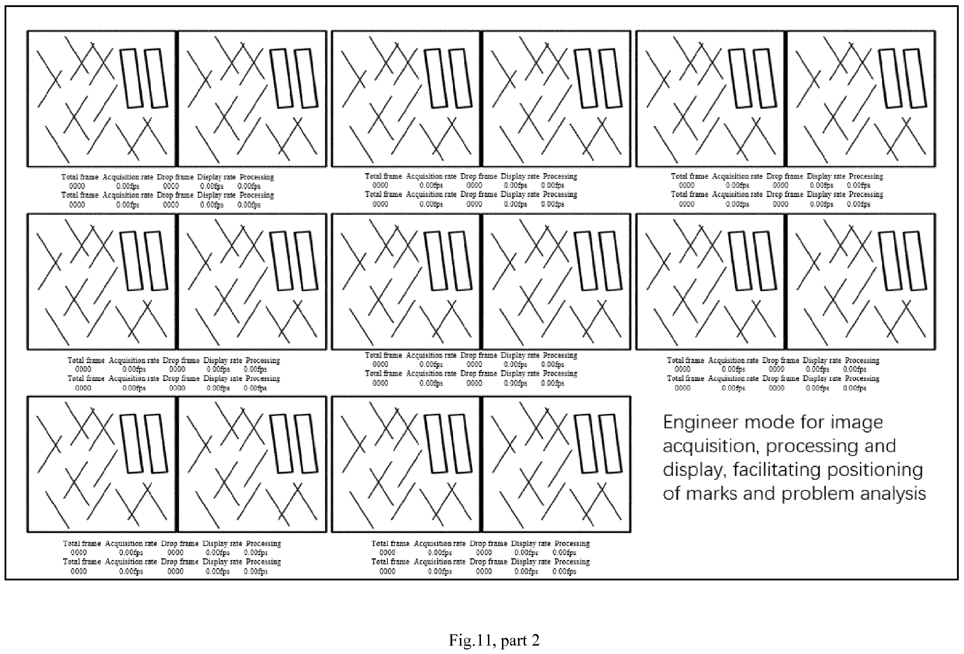

Fig. 11 is a schematic view of a display interface of test data according to the embodiment of the present invention. As shown in Fig. 11, when in the production line mode, only video stream data is acquired without processing and display, thereby reducing the CPU load. Here, as shown in Fig. 11, when in the production line mode, the image conversion unit and the image display unit can be directly turned off. However, in order to increase the conversion speed between modes and avoid the startup time of the graphics processing unit (GPU) and the display when switching to the engineer mode, it is also possible to display an empty content on the display interface. When in the engineer mode, the test image data is acquired, processed, and displayed, so that the test image obtained by testing the camera module can be seen on the display interface.

Therefore, the test data processing apparatus described above further comprises: a mode switching unit for selectively turning on or off the image conversion unit and the image display unit based on a predetermined operation mode.

Moreover, in the test data processing apparatus described above, in a case where the image conversion unit is turned off, the image display unit displays the plurality of display sub-interfaces whose contents are empty.

Further, in the test data processing apparatus described above, in a case where the image conversion unit is turned on, the image display unit displays an image of a test object imaged by a corresponding camera module on the plurality of display sub-interfaces.

In this way, the test data processing apparatus according to the embodiment of the present invention switches the operation mode by the mode switching unit, so that a multi-mode client design can be realized, improving the production efficiency, and reducing the CPU usage.

Moreover, the test data processing apparatus according to the embodiment of the present invention switches an operation mode by a mode switching unit to display different contents on a display interface so that a dual mode of production line production and engineer debugging can be adapted, wherein the production line production mode only provides an acquisition module, cancels a display thread and a processing thread, reduces the CPU load, and the engineer mode turns on the acquisition, processing, display threads for alignment marking, module imaging inspection and problem analysis.

Moreover, as described above, since the test data processing apparatus according to the embodiment of the present invention has high requirements on device performance, in the case where the server-client architecture is adopted, for example, there are high requirements on the CPU performance of both the server and the client. In this case, especially for the client with low CPU performance, a system crash will very likely occur due to insufficient performance. Therefore, a solution to this problem is needed.

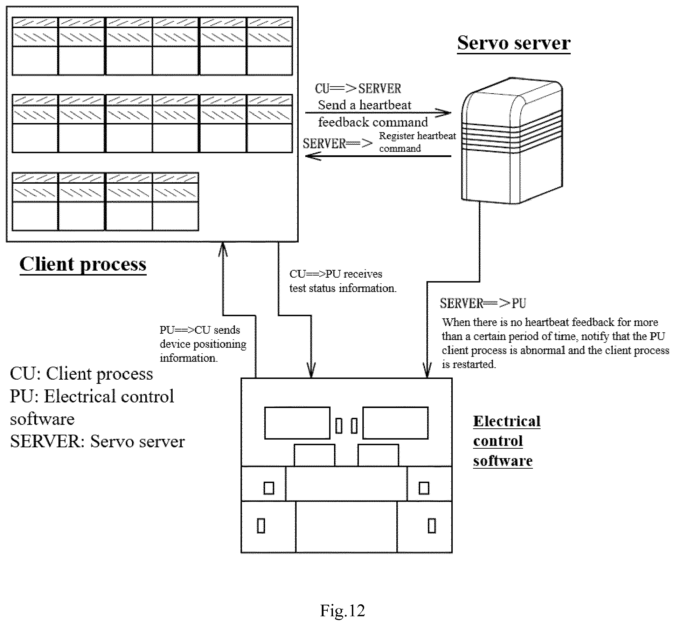

Fig. 12 is a schematic view of a monitoring process of test data processing according to the embodiment of the present invention. As shown in Fig. 12, a heartbeat command is registered by a servo server, and the heartbeat command is periodically sent to a client process. A client sends a heartbeat feedback command in real time after receiving the heartbeat, so that the servo server can monitor data processing and display processes of the client. When the servo server finds that the heartbeat feedback command fails to be received within a unit time, the servo server sends a client timeout command to main control software to notify the client that the process is abnormal and the client process needs to be restarted. After that, the main control software turns off the crashed client software and restarts the client. Therefore, in the test data processing apparatus according to the embodiment of the present invention, the client is dynamically managed by the servo server, and the client process is abnormally crashed and automatically started.

Furthermore, it can be understood by those skilled in the art that, in the test data processing apparatus according to the embodiment of the present invention, the test image data of the plurality of camera modules is acquired by the plurality of image acquisition subunits, and data processing and display are performed by means of multi-channel video streaming. Therefore, even if an error does not occur in the entire image display unit, but an error occurs in an image acquisition subunit or a certain video streaming channel, it can be determined by a state of a response signal. Therefore, in the test data processing apparatus according to the embodiment of the present invention, preferably, if there is a problem in the processing and display of only one test image data, it is not necessary to restart the entire data processing system, but only a data processing portion associated with the one test image data is required to be restarted, which is obviously helpful to improve the efficiency of data processing.

Therefore, the test data processing apparatus described above further comprises: an error detecting unit for sending a detection signal to at least one of the image acquisition unit, the image conversion unit, and the image display unit, and receiving a response signal in response to the detection signal; wherein when the error detecting unit cannot receive a response signal corresponding to a specific image acquisition subunit within a predetermined time, it is determined that the processing of the test image data of the camera module corresponding to the specific image acquisition subunit fails.

Moreover, the operation conditions of the client are detected by the error detecting unit, so that the stable running of the test process can be ensured by adopting a daemon process and a servo technology.

In summary, with the test data processing apparatus according to the embodiment of the present invention, the acquisition and display of image data of the batch test of the camera modules can be realized, thereby reducing the personnel input, reducing the device space, and improving the production efficiency.

According to another aspect of the embodiment of the present invention, there is provided a test data processing method for processing test image data of a plurality of camera modules arranged in a matrix form included in a spliced test board obtained by testing the plurality of camera modules, the test data processing method comprising: acquiring test image data of each of the plurality of camera modules, wherein the test image data is acquired by using a plurality of image acquisition subunits arranged in a matrix form; receiving the test image data from the plurality of image acquisition subunits by multi-channel video streaming and converting it into display data suitable for display, wherein each video stream channel is used to transmit the test image data acquired by one image acquisition subunit; and displaying an image based on the display data on a display interface, wherein a plurality of display sub-interfaces arranged in a matrix form are displayed on the display interface.

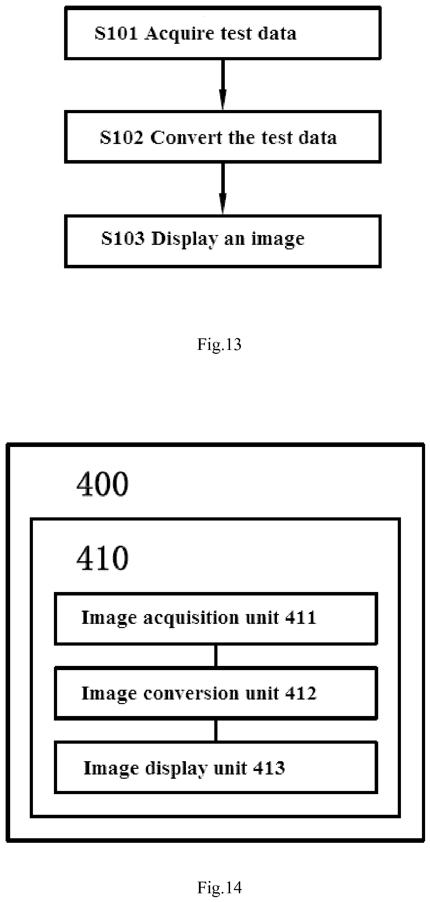

Fig.13 is a schematic flowchart of a test data processing method according to the embodiment of the present invention. As shown in Fig. 13, the test data processing method according to the embodiment of the present invention is used for processing test image data of a plurality of camera modules arranged in a matrix form included in a spliced test board obtained by testing the plurality of camera modules, and comprises: S101, acquiring test image data of each of the plurality of camera modules, wherein the test image data is acquired by using a plurality of image acquisition subunits arranged in a matrix form; S102, receiving the test image data from the plurality of image acquisition subunits by multi-channel video streaming and converting it into display data suitable for display, wherein each video stream channel is used to transmit the test image data acquired by one image acquisition subunit; and S103, displaying an image based on the display data on a display interface, wherein a plurality of display sub-interfaces arranged in a matrix form are displayed on the display interface.

In the test data processing method described above, each of the plurality of image acquisition subunits has a second identification information generated based on a first identification information of the camera module, so that the plurality of image acquisition subunits at least partially correspond to the plurality of camera modules.

In the test data processing method described above, the first identification information is an FPGA initialization sequence number and a chip serial number of the camera module, and the second identification information is a 64-bit ID key.

The test data processing method described above further comprises selectively performing the step of receiving and converting the test image data and the step of displaying the image based on the display data, based on a predetermined operation mode.

The test data processing method described above further comprises: in a case where the step of receiving and converting the test image data is not performed, displaying the plurality of display sub-interfaces whose contents are empty.

The test data processing method described above further comprises: in a case where the step of receiving and converting the test image data is performed, displaying an image of a test object imaged by a corresponding camera module on the plurality of display sub-interfaces.

The test data processing method described above further comprises: sending a detection signal to at least one of the image acquisition unit, the image conversion unit, and the image display unit, and receiving a response signal in response to the detection signal; and in a case where a response signal corresponding to a specific image acquisition subunit cannot be received within a predetermined time, determining that the processing of the test image data of the camera module corresponding to the specific image acquisition subunit fails.

Here, it can be understood by those skilled in the art that other details of the test data processing method according to the embodiment of the present invention are completely the same as the corresponding details previously described with respect to the test data processing apparatus according to the embodiment of the present invention, and therefore they are not described again so as to avoid redundancy.

Furthermore, it can also be understood by those skilled in the art that the test data processing apparatus and the test data processing method according to the embodiment of the present invention do not necessarily correspond to the aforementioned spliced test board structure shown in Figs. 2 to 6, and the test data processing apparatus and the test data processing method according to the embodiment of the present invention are applicable as long as the simultaneous testing of the plurality of camera modules can be realized by the spliced test board. Moreover, the simultaneous testing of the plurality of camera modules is not limited to the simultaneous testing of all the camera modules on the entire spliced test board, or may be the simultaneous testing of some of the camera modules on the entire spliced test board. Furthermore, the simultaneous testing is not limited to testing the plurality of camera modules at the same time. For example, the plurality of camera modules may be sequentially tested according to the order of the light source scanning to obtain corresponding test results, and this case is also included in the embodiment of the present invention.

According to still another aspect of the embodiment of the present invention, there is provided a test device comprising a test data processing apparatus, and the test data processing apparatus is used for processing test image data of a plurality of camera modules arranged in a matrix form included in a spliced test board obtained by testing the plurality of camera modules, and comprises: an image acquisition unit for acquiring test image data of each camera module, wherein the image acquisition unit comprises a plurality of image acquisition subunits arranged in a matrix form; an image conversion unit for receiving the test image data from the plurality of image acquisition subunits by multi-channel video streaming and converting it into display data suitable for display, wherein each video stream channel is used to transmit the test image data acquired by one image acquisition subunit; and an image display unit for displaying an image based on the display data on a display interface, wherein the image display unit displays a plurality of display sub-interfaces arranged in a matrix form on the display interface.

Fig. 14 is a schematic block diagram of a test device according to the embodiment of the present invention. As shown in Fig. 14, the test device 400 according to the embodiment of the present invention includes a test data processing apparatus 410. The test data processing apparatus 410 is used for processing test image data of a plurality of camera modules arranged in a matrix form included in a spliced test board obtained by testing the plurality of camera modules. Specifically, the test data processing apparatus 410 includes: an image acquisition unit 411 for acquiring test image data of each camera module, wherein the image acquisition unit 411 includes a plurality of image acquisition subunits arranged in a matrix form; an image conversion unit 412 for receiving the test image data from the plurality of image acquisition subunits of the image acquisition unit 411 by multi-channel video streaming and converting it into display data suitable for display, wherein each video stream channel is used to transmit the test image data acquired by one image acquisition subunit; and an image display unit 413 for displaying an image based on the display data converted by the image conversion unit 412 on a display interface, wherein the image display unit 413 displays a plurality of display sub-interfaces arranged in a matrix form on the display interface.

In the test device described above, each of the plurality of image acquisition subunits has a second identification information generated based on a first identification information of the camera module, so that the plurality of image acquisition subunits at least partially correspond to the plurality of camera modules.

In the test device described above, the first identification information is an FPGA initialization sequence number and a chip serial number of the camera module, and the second identification information is a 64-bit ID key.

In the test device described above, the test data processing apparatus further comprises: a mode switching unit for selectively turning on or off the image conversion unit and the image display unit based on a predetermined operation mode.

In the test device described above, in a case where the image conversion unit is turned off, the image display unit displays the plurality of display sub-interfaces whose contents are empty.

In the test device described above, in a case where the image conversion unit is turned on, the image display unit displays an image of a test object imaged by a corresponding camera module on the plurality of display sub-interfaces.

In the test device described above, the test data processing apparatus further comprises: an error detecting unit for sending a detection signal to at least one of the image acquisition unit, the image conversion unit, and the image display unit, and receiving a response signal in response to the detection signal; wherein when the error detecting unit cannot receive a response signal corresponding to a specific image acquisition subunit within a predetermined time, it is determined that the processing of the test image data of the camera module corresponding to the specific image acquisition subunit fails.

Here, it can be understood by those skilled in the art that although the test device 400 only including the test data processing apparatus 410 is shown in Fig. 14, the test device 400 may also include components not shown in Fig. 14. For example, in order to test the camera module, the test device 400 should include a light source, an object such as a mark imaged by the camera module, and other components.

Moreover, it can be understood by those skilled in the art that other details of the test device according to the embodiment of the present invention are completely the same as the corresponding details previously described with respect to the test data storage apparatus according to the embodiment of the present invention, and therefore they are not described again so as to avoid redundancy.

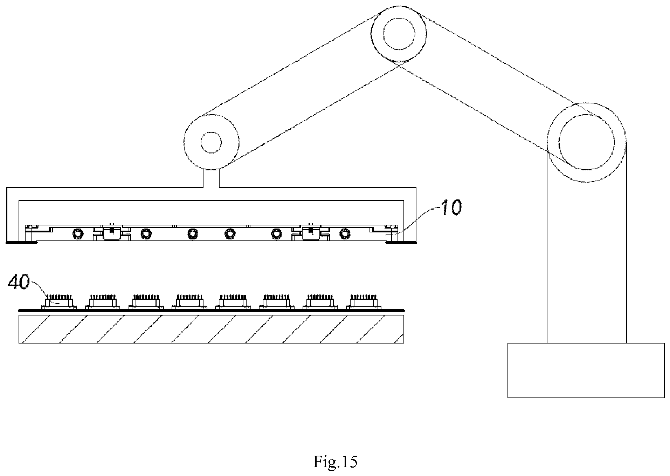

Fig. 15 is a schematic view of testing a camera module disposed on a spliced test board by the test device according to the embodiment of the present invention. As shown in Fig. 15, the test device has a test circuit 40 that is adapted to the board body 10. The test device is connected to the medium modules 20 of the board body 10 via the test circuit 40, so that the plurality of medium modules 20 placed in the board body 10 are simultaneously connected to each other, and the camera modules 30 carried by the medium modules 20 is simultaneously tested. In addition, the connection between the medium module 20 and the camera module 30 is one-to-one. That is to say, the camera module 30 may complete all test operations by the medium module 20 without having to repeatedly access and remove with respect to the medium module 20. For example, the camera module 30 to be tested is connected and fixed to the medium module 20 before starting a test operation. The medium module 20 will carry the camera module 30 to perform all the tests. The medium module 20 will always be connected to the camera module 30 regardless of whether the camera module 30 passes the tests or not. That is to say, the medium module 20 may also assist the camera module 30 in performing corresponding operations without passing a test for the camera module 30 that has not passed the test. For the camera module 30 that passes the test, the medium module 20 will also accompany the camera module 30 to complete other tests. Also, because the medium module 20 provides an adapted test interface, the test circuit 40 only needs a corresponding interface so that the medium module 20 can perform different performance test items. By means of the medium module 20, the camera module 30 can avoid repeated access and removal during all of the tests, including the flow transfer process, thereby reducing the time required for each camera module 30 to test, improving the overall efficiency of the test, and adapting for the batch test of the camera modules 30.

The test data processing apparatus, the test data processing method and the test device according to the present invention can realize the acquisition and display of image data of a batch test of camera modules, thereby reducing the personnel input, reducing the device space, and improving the production efficiency.

It should be understood by those skilled in the art that the embodiments of the present invention described in the above description and the accompanying drawings are only exemplary and not limiting to the present invention. The objects of the present invention have been achieved completely and efficiently. The function and structural principles of the present invention have been illustrated and described in the embodiments, and the embodiments of the present invention may be varied or modified without departing from the principles.

## Claims

1. A test data processing apparatus for processing test image data of a plurality of camera modules arranged in a matrix form included in a spliced test board obtained by testing the plurality of camera modules, the test data processing apparatus comprising:
an image acquisition unit for acquiring test image data of each camera module, wherein the image acquisition unit comprises a plurality of image acquisition subunits arranged in a matrix form;
an image conversion unit for receiving the test image data from the plurality of image acquisition subunits by multi-channel video streaming and converting it into display data suitable for display, wherein each video stream channel is used to transmit the test image data acquired by one image acquisition subunit; and
an image display unit for displaying an image based on the display data on a display interface, wherein the image display unit displays a plurality of display sub-interfaces arranged in a matrix form on the display interface.

2. The test data processing apparatus according to claim 1, wherein each of the plurality of image acquisition subunits has a second identification information generated based on a first identification information of the camera module, so that the plurality of image acquisition subunits at least partially correspond to the plurality of camera modules.

3. The test data processing apparatus according to claim 2, wherein the first identification information is an FPGA initialization sequence number and a chip serial number of the camera module, and the second identification information is a 64-bit ID key.

4. The test data processing apparatus according to any one of claims 1 to 3, **characterized in that** it further comprises:
a mode switching unit for selectively turning on or off the image conversion unit and the image display unit based on a predetermined operation mode.

5. The test data processing apparatus according to claim 4, **characterized in that** in a case where the image conversion unit is turned off, the image display unit displays the plurality of display sub-interfaces whose contents are empty.

6. The test data processing device according to claim 4, **characterized in that** in a case where the image conversion unit is turned on, the image display unit displays an image of a test object imaged by a corresponding camera module on the plurality of display sub-interfaces.

7. The test data processing apparatus according to any one of claims 1 to 3, **characterized in that** it further comprises:
an error detecting unit for sending a detection signal to at least one of the image acquisition unit, the image conversion unit, and the image display unit, and receiving a response signal in response to the detection signal;
wherein when the error detecting unit cannot receive a response signal corresponding to a specific image acquisition subunit within a predetermined time, it is determined that the processing of the test image data of the camera module corresponding to the specific image acquisition subunit fails.

8. A test data processing method for processing test image data of a plurality of camera modules arranged in a matrix form included in a spliced test board obtained by testing the plurality of camera modules, the test data processing method comprising:
acquiring test image data of each of the plurality of camera modules, wherein the test image data is acquired by using a plurality of image acquisition subunits arranged in a matrix form;
receiving the test image data from the plurality of image acquisition subunits by multi-channel video streaming and converting it into display data suitable for display, wherein each video stream channel is used to transmit the test image data acquired by one image acquisition subunit; and
displaying an image based on the display data on a display interface, wherein a plurality of display sub-interfaces arranged in a matrix form are displayed on the display interface.

9. The test data processing method according to claim 8, wherein each of the plurality of image acquisition subunits has a second identification information generated based on a first identification information of the camera module, so that the plurality of image acquisition subunits at least partially correspond to the plurality of camera modules.

10. The test data processing method according to claim 9, wherein the first identification information is an FPGA initialization sequence number and a chip serial number of the camera module, and the second identification information is a 64-bit ID key.

11. The test data processing method according to any one of claims 8 to 10, **characterized in that** it further comprises:
selectively performing the step of receiving and converting the test image data and the step of displaying the image based on the display data, based on a predetermined operation mode.

12. The test data processing method according to claim 11, **characterized in that** it further comprises:
in a case where the step of receiving and converting the test image data is not performed, displaying the plurality of display sub-interfaces whose contents are empty.

13. The test data processing method according to claim 11, **characterized in that** it further comprises:
in a case where the step of receiving and converting the test image data is performed, displaying an image of a test object imaged by a corresponding camera module on the plurality of display sub-interfaces.

14. The test data processing method according to any one of claims 8 to 10, **characterized in that** it further comprises:
sending a detection signal to at least one of the image acquisition unit, the image conversion unit, and the image display unit, and receiving a response signal in response to the detection signal; and
in a case where a response signal corresponding to a specific image acquisition subunit cannot be received within a predetermined time, determining that the processing of the test image data of the camera module corresponding to the specific image acquisition subunit fails.

15. A test device, comprising the test data processing apparatus according to any one of claims 1 to 7.
